# EUROPEAN PATENT SPECIFICATION

(11) **EP 0 767 433 B1**
(45) Date of publication and mention of the grant of the patent: **19.01.2005**
(21) Application number: 95921987.4
(22) Date of filing: 19.06.1995
(51) Int. Cl.: G06F 13/00, G06F 12/14, H04L 29/06, H04L 12/24

(54) **NETWORK SYSTEM AND NETWORK MANAGEMENT SYSTEM**
NETZWERKSYSTEM UND NETZWERKVERWALTUNGSSYSTEM
SYSTEME DE RESEAUX ET SYSTEME DE GESTION DE RESEAUX

(30) Priority: 20.06.1994 JP 13681994
(43) Date of publication of application: 09.04.1997
(73) Proprietor: Faith, Inc., Kyoto 604-8171 (JP)
(72) Inventor: HIRASAWA,Hajime Faith,Inc., Imon-MeijiYasuda.Bldg., Toraya-cho, Nakagyo-ku, Kyoto 604-8171 (JP)
(74) Representative: Beresford, Keith Denis Lewis
(86) International application number: PCT/JP1995/001215
(87) International publication number: WO 1995/035539

(56) References cited:
- BE-A- 1 005 100
- JP-A- 4 216 252
- PATENT ABSTRACTS OF JAPAN vol. 018, no. 447 (E-1594), 19 August 1994 & JP 06 141083 A (RICOH CO LTD), 20 May 1994,
- "Transmission Control Protocol/Internet Protocol Networking over Netbios" IBM TECHNICAL DISCLOSURE BULLETIN, vol. 36, no. 12, 1 December 1993, pages 619-624, XP002121686
- PATENT ABSTRACTS OF JAPAN vol. 015, no. 094 (E-1041), 6 March 1991 & JP 02 305140 A (RICOH CO LTD), 18 December 1990,

## Description

### Field of the Invention

This invention relates to a network system, in particular to its creating flexibility and changeability, and to improvement in its manageability for an operator who makes access to it.

### Background Art

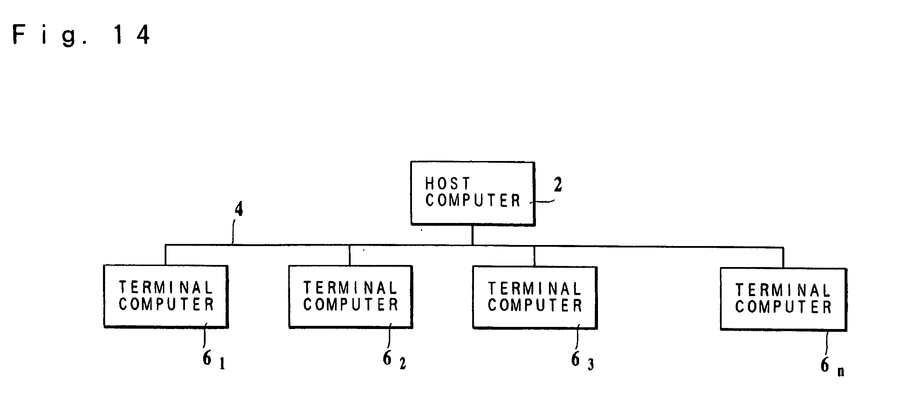

FIG. 14 shows a typical network system. To a host computer 2 are connected a plurality of terminal computers 61, 62, 63, ..., 6n. Each of the terminal computers 61, 62, 63, ..., 6n can use the software in the host computer 2. Also, the data in the host computer 2 may be shared with the terminal computers 61, 62, 63, ..., 6n. Therefore, an important advantage is provided, for example, in creating a database updated by the terminal computers 61, 62, 63, ..., 6n. Another advantage is that the terminal computers 61, 62, 63, ..., 6n can exchange data among themselves through the host computer 2.

### Disclosure of the Invention

However, the conventional network systems such as described above had the following problems.

The terminal computers 61, 62, 63, ..., 6n respectively have hardware IDs or software protocols by means of which the host computer 2 manages the terminal computers 61, 62, 63, ..., 6n. Therefore, when the terminal computers 61, 62, 63, ..., 6n are to be changed in number or type, cumbersome work is required to change the hardware IDs or software protocols of the terminal computers or to change terminal computer registration on the side of the host computer 2. This prevents the network constitution (connection state of the terminal computers) from being changed flexibly according to the purpose of use of the network.

Another problem with the conventional arrangement in which the management is made at each terminal is that the host computer cannot identify a person who makes access to a terminal computer. As a result, the accessing person is unknown and accurate management is impossible.

Another problem is that, when a network is to be created through public communication line, the public communication line has to be connected all the time. This is uneconomical.

The object of the invention is to provide a network system capable of solving the above problems, with advantages of flexibility, changeability, economy, and accurate management of the accessing person.

According to a first aspect of the present invention, there is provided a network system having a host computer and a plurality of terminal computers connected to the host computer through a communication path, wherein each of the terminal computers comprises:
reading means for reading software code contained in the software started in the terminal computer; and
transmitting means for transmitting, through a communication path, the software codes transmitted from the terminal computers,
the host computer comprising:
   receiving means for receiving the software codes transmitted from the terminal computers; and
   network forming means for creating a network by interconnecting the terminal computers that are operating software programs having the same software code among the software codes received by the receiving means,
wherein the terminal computers which belong to the network, share data or a program stored in the host computer.

According to a second aspect of the present invention, there is provided a host computer for use in a network system having a host computer and a plurality of terminal computers connected to the host computer, wherein each terminal computer comprises:
reading means for reading a software code contained in a software program started in the terminal computer; and
transmitting means for transmitting through a communication path, the software code read by the reading means,
wherein the terminal computers which belong to the network, share data or program stored in the host computer,
the host computer comprising:
receiving means for receiving the software codes transmitted from the terminal computers; and
network forming means for creating a network by interconnecting the terminal computers that are operating software programs having the same software code among the software codes received by the receiving means.

According to a third aspect of the present invention, there is provided a terminal computer for use in a network system having a host computer and a plurality of terminal computers connected to the host computer, the terminal computer comprising:
reading means for reading a software code contained in a software program started in the terminal computer; and
transmitting means for transmitting through a communication path, the software code read by the reading means,
the host computer comprising:
   receiving means for receiving the software codes transmitted from the terminal computer; and
   network forming means for creating a network by interconnecting the terminal computers that are operating software programs having the same software code among the software codes received by the receiving means,
wherein the terminal computers which belong to the network, share data or program stored in the host computer.

The invention also provides a method of use of a network system or computer according to the first, second and third aspects of the invention and processor implementable instructions and a memory medium storing such instructions for implementing all the steps of such methods.

By the way, the term "network" as used herein refers to a state in which the host computer is connected to one or more terminal computers.

The characteristics, other objects, applications, and effects of the invention will be made clear in reference to embodiments and appended drawings.

### Brief Description of the Drawings

FIG. 1 is a schematic view of a network as an embodiment of the invention.
FIG. 2 shows the entire structure of the network as an embodiment of the invention.
FIG. 3 shows the constitution of a host computer 10.
FIG. 4 shows the constitution of a terminal computer 14.
FIG. 5 and FIG. 6 show the operation of the network system.
FIG. 7 shows the operation of the network system as another embodiment of the invention.
FIG. 8 shows wiring connection of another embodiment.
FIG. 9 shows a display example with a display device 37 of a terminal computer.
FIG. 10 is a table of relationship between personal IDs and usable softwares stored in the host computer 10.
FIG. 11 and FIG. 12 show operation of a network system as another embodiment in which data are updated.
FIG. 13 shows wiring connection of the embodiment shown in FIG. 12.
FIG. 14 shows a conventional network system.

### The Best Form of Embodying the Invention

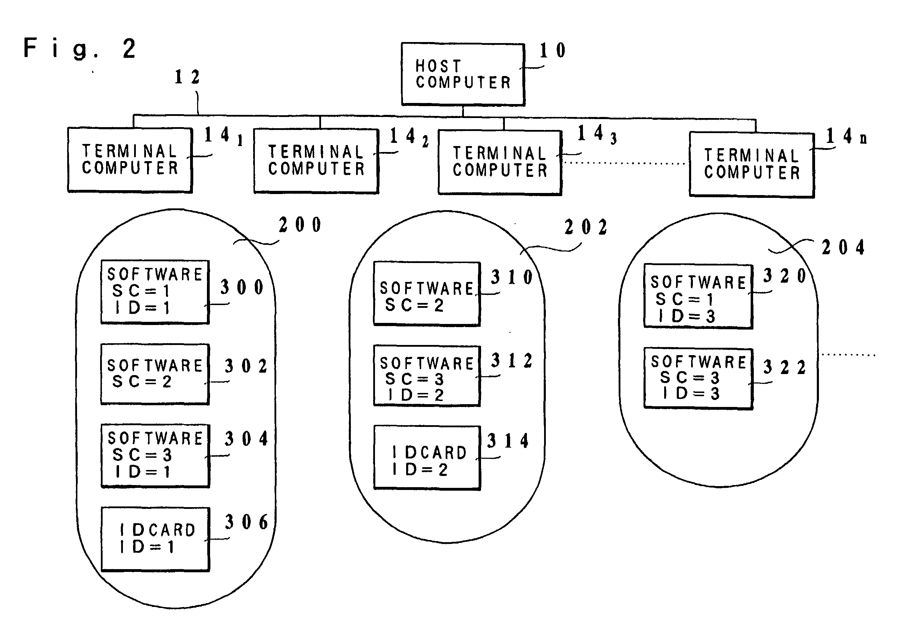

FIG. 2 shows the entire structure of the network as an embodiment of the invention. A plurality of terminal computers 141, 142, 143, ..., 14n are connected through a connection path 12 to a host computer 10. Users 200, 202, 204, ... have softwares for use in the terminal computers 141, 142, 143, ..., 14n, respectively. These softwares are stored in portable recording media (such as optical disks and magnetic disks) to be read with reading devices (such as optical disk drives and magnetic disk drives), or they may be stored in a storage (such as hard disks) in the terminal computers 141, 142, 143, ..., 14n.

The softwares used by the users are respectively provided with software codes, SC = 1, 2, 3, ..., K. In other words, an identical software is provided with an same software code.

Users permitted to access the network have been provided with respective user identification (ID) codes (ID = 1, 2, 3, ..., N). For example, the user 200 has the ID = 1, the user 202 has the ID = 2, the user 204 had the ID = 3, and so on. These personal IDs are stored in the softwares in the following manner.

When a magnetic disk or the like in which a software is stored is to be sent from a vendor to a user by mail or the like, the user sends an order for the magnetic disk while disclosing the user's predetermined ID. The software vendor records the user's ID in the software on the magnetic disk and sends it to the user. In this way, the personal IDs of the users are recorded respectively in the users' softwares.

In the cases other than the direct order (such as the package purchase at retail shops on the market), the users' IDs are not recorded on the magnetic disks at the time of sale. In that case, there will be no problem if the user applies for on-line recording of the personal ID from the terminal computer to the host computer so that the user's personal ID is recorded on the magnetic disk inserted in the terminal computer drive.

Furthermore, in the case the software is recorded in the read-only medium such as the CD-ROM, a separate magnetic card or the like in which the personal ID is recorded may be handed to the user (Refer to the magnetic cards 306, 314 shown in FIG. 2).

In any case, every user receives one personal ID in principle.

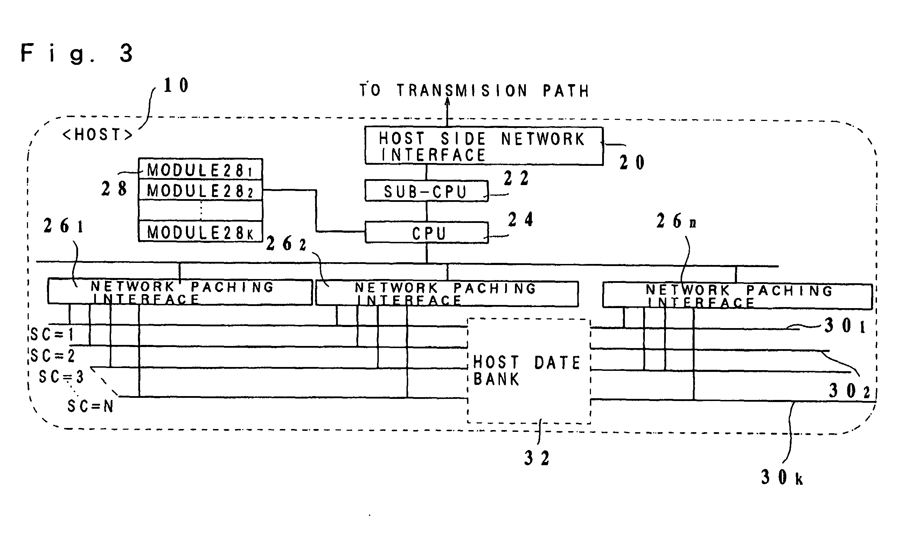

A detailed constitution of the host computer 10 is shown in FIG. 3. The host computer 10 comprises a transmitting-receiving means or a host side network interface 20, a sub-CPU 22, and a CPU 24. The CPU 24 is connected to a module memory device 28 in which modules 281, 282, ..., 28n required for executing softwares are stored. By the way, some kinds of softwares can operate without requiring these modules. The CPU 24 is also provided with network patching interfaces 261, 262, ..., 26n corresponding to the terminal computers 141, 142, 143, ..., 14n, respectively. The network patching interfaces 261, 262, ..., 26n are controlled by the CPU 24 to make network connection. The network patching interfaces 261, 262, ..., 26n are connected to network lines 301, 302, ..., 30k, respectively. The network lines 301, 302, ..., 30k are connected to a host data bank 32 which stores data corresponding to respective softwares. By the way, the network patching interfaces and the network lines may also be constituted with hardware or software, or with both hardware and software.

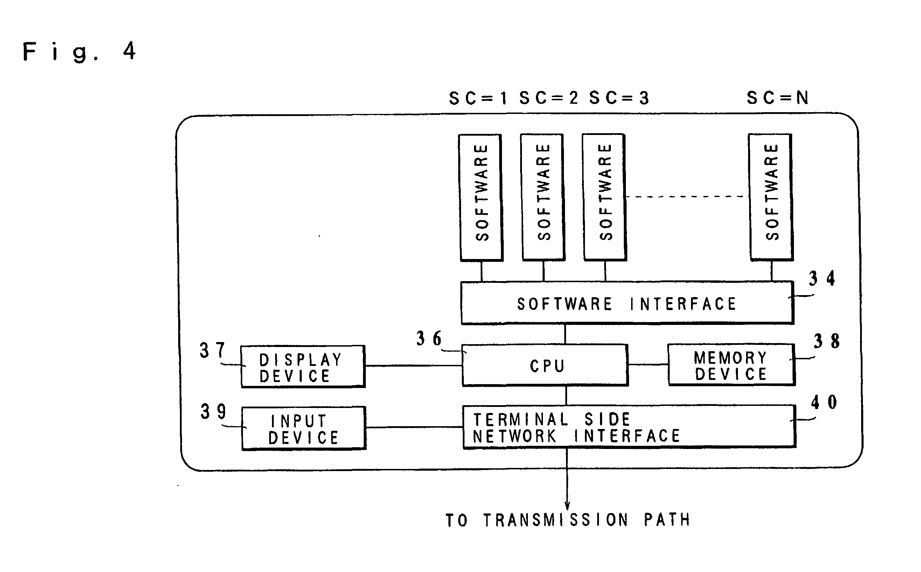

A detailed constitution of the terminal computer 14 is shown in FIG. 4. The terminal computer 14 as transmitting means is provided with a terminal side network interface 40, a CPU 36, and a memory device 38. The CPU 36 controls the operation of softwares 161, 162, ..., 16k. The memory device 38 secures a memory area for processing. A software interface 34 creates connection between the softwares 161, 162, ..., 16k and the network. That is to say, the term "software interface 34" mentioned here refers to a floppy disk drive when the software is stored in a floppy disk, and a CD-ROM drive when the software is stored in a CD-ROM. Furthermore, a card reader for reading a personal ID stored on a magnetic card also corresponds to the software interface 34.

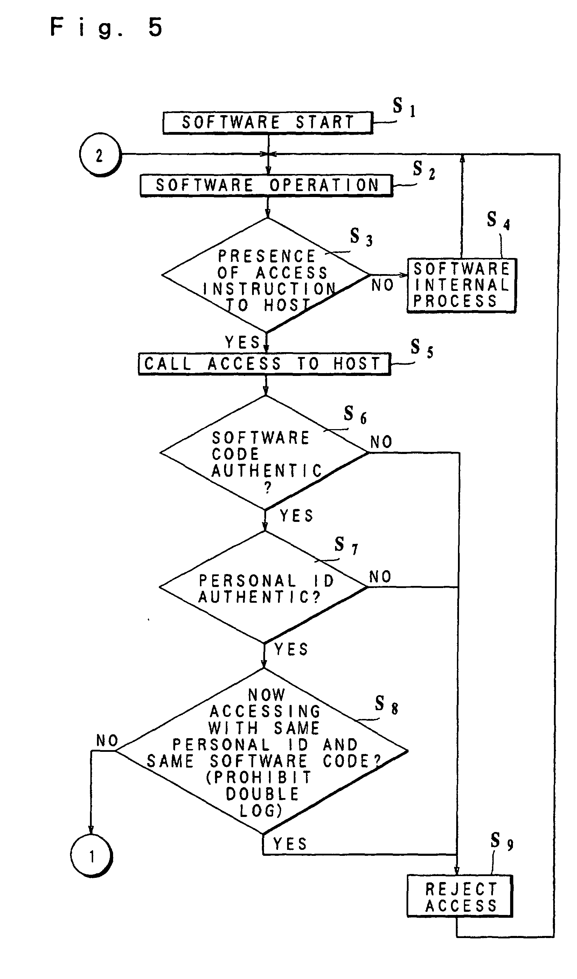

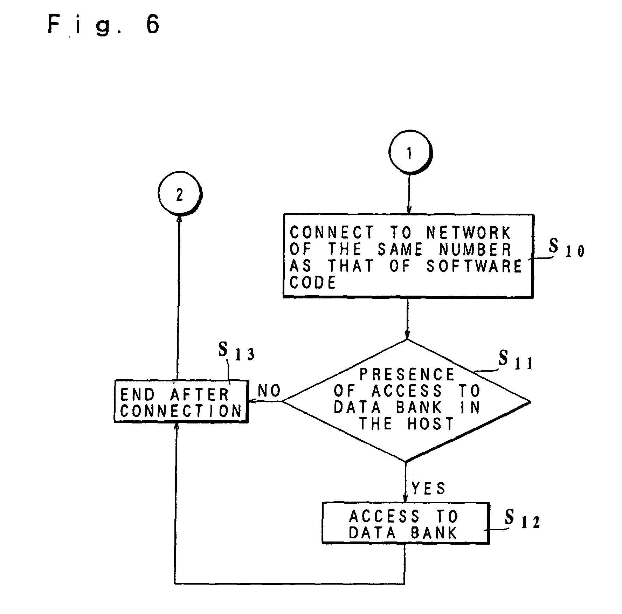

The operation of the network system shown in FIGs. 2 through 4 is shown in flow charts of FIGs. 5 and 6. First, at any of the terminal computers 141, 142, 143, ..., 14n, a user starts any of the softwares the person has (step S1). It is assumed for example that the user 200 starts the software 300. Next, the software 300 is started (step S2) and instructions are executed in succession. In that case, discrimination is made (step S3) whether the instruction is for accessing the host computer 10. If the access is unnecessary, the instruction is executed on the terminal computer side only (step S4).

In the case of an instruction for accessing the host computer 10, a CPU 36 in the terminal computer works to access the host computer 10 through a terminal side network interface 40 and the transmission path 12 (step S5). Here, the CPU 36 reads a software code (SC = 1) and a personal ID (ID = 1) recorded in the software 300, adds them to the instruction, and sends them to the host computer 10.

In the case the software 300 is started as described above, the software code (SC = 1) and the personal ID (ID = 1) are recorded in the corresponding software. However, when the software 302 is started, a software code (SC = 2) only is recorded in the corresponding software but the personal ID is not recorded. In that case, the user inserts an ID card 306 into a card reader (software interface). The CPU 36 searches the medium inserted into the software interface 34 to obtain a personal ID (ID = 1) from the ID card 306. Thus, when the personal ID is not recorded in the started software, the CPU 36 obtains the personal ID from the medium inserted into the software interface of the terminal computer. In other words, the personal ID is confirmed as long as the medium in which the personal ID is recorded is inserted into one of the software interface of the terminal computer used.

The host computer 10 receives an instruction, a software code, and a personal ID sent from the terminal computer through a host side network interface 20 as a result of an access. Then, a sub-CPU 22 of the host computer 10 determines whether the software code sent together with the instruction is correct (step S6). In the case of a software code not registered in advance, the access is rejected (step S9), and the process returns to the step S2. In the case of a software code registered in advance, the process goes to the step S7.

In the step S7, the sub-CPU 22 of the host computer 10 determines whether the personal ID sent together with the instruction is correct. In the case of a personal ID not registered in advance, the access is rejected (step S9), and the process returns to the step S2. In the case of a personal ID registered in advance, the process goes to the step S8.

In this way, it is arranged that the access is rejected unless the software code and the personal ID are authentic.

In the step S8, the sub-CPU 22 determines whether the user is currently accessing another network by means of the same software code and the same personal ID (step S8). This is intended to prevent the same user from using the same software in another network at the same time and to prevent unauthorized use of a personal ID for a person by more than one persons. Therefore, when an access to the network is being made already, a new access to another network is rejected (step S9) and the process returns to the step S2. In the case of a first access, the process goes to the step S10 shown in FIG. 6.

In the step S10, the CPU 24 connects the network patching interfaces 261, 262, ..., 26n corresponding to the terminal computers to the network lines 301, 302, ..., 30k corresponding to the softwares started in the terminal computers (step S10). In other words, a network forming means is constituted in the step S10 of this embodiment. If necessary here, the CPU 24 reads modules 281, 282, ..., 28n corresponding to the softwares from the module memory device 28 and connects them. Therefore, if a software having the same software code is started from a terminal computer, a network is constituted together with the software.

Next, a determination is made whether an instruction for accessing the host data bank 32 is contained in the software (step S11). If no access is made, the process returns to the step S2 upon completing the connection to the network. If an access is to be made, the access is made to a corresponding data bank 32 (step S12). That is to say, data corresponding to the software in the data bank are combined to form a network. After that, the process returns to the step S2. Thus, the data in the data bank 32 may be used at a respective terminal computers.

By the way, this embodiment is arranged so that the steps S1-S5 are processed with the terminal computers and the steps from S6 on are processed with the host computer. Furthermore, the process shown with the steps S1-S5 may be included in the software 300, or may be provided in the form of a record in a separate memory medium.

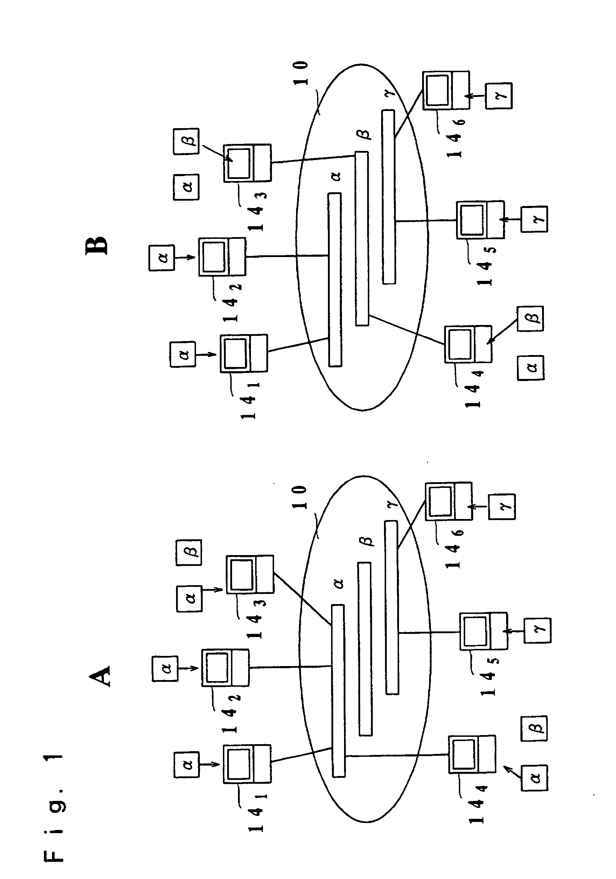

Because of the constitution and operation described above, the network structure may be flexibly changed by the softwares started in the terminal computers 14₁, 14₂, 14₃, ..., 14ₙ. This state is schematically shown in FIG. 1. As shown in FIG. 1A, softwares α, β, and γ are started in the terminal computers 14₁-14₃ and corresponding to the softwares α, β, and γ, networks α, β, and γ are constituted by the host computer 10. Next, when the software is changed from α to β at the terminal computer 14₃, the terminal computer 14₃ is switch-connected to the network β. Similarly, the terminal computer 14₄ is also switch-connected to the network β. In other words, a flexible network is formed according to the software started at the terminal computer. Furthermore, if a software is made to include more than one software codes so that the software code is changed according to the execution of an instruction, a network connected according to the execution of the instruction is automatically changed. Thus, the terminal computer may be connected to other kind of network easily by changing the software only without changing the hardware structure of the terminal computer.

When the network system described above is used, the number of softwares required for starting on the terminal computer side is minimized and much information is stored in the host data bank 32.

By the way, the host computer 10 in the above embodiment is provided with the module memory device 28. However, if the software started in the terminal computer is made operable without the module, the module need not be connected at the time of forming the network. In that case too, the host data bank 32 is connected to the network.

With this invention, the latest data can be obtained by simply updating the data in the host data bank without changing the software in the terminal computer. For example, this invention is applicable to electronic books in which conclusion and story may be changed, electronic dictionaries in which the contents are variable, personal organizers in which traffic networks and road maps may be updated every year, games in which contents and degree of difficulty may be changed, telephone directories to be updated every year, shopping catalogues in which the contents may be changed, and so on. In particular in those applications, permission or rejection of the access is determined with the software code and personal ID to preclude unauthorized users.

Furthermore, the network is not formed unless the personal ID is authentic. Therefore, users who are not registered or delaying payment of the network rates are refused to use.

Furthermore, since persons who make access to the network are accurately known by the personal IDs, charging of rates (charging to credit cards, issuing bills, etc.) is controlled easily.

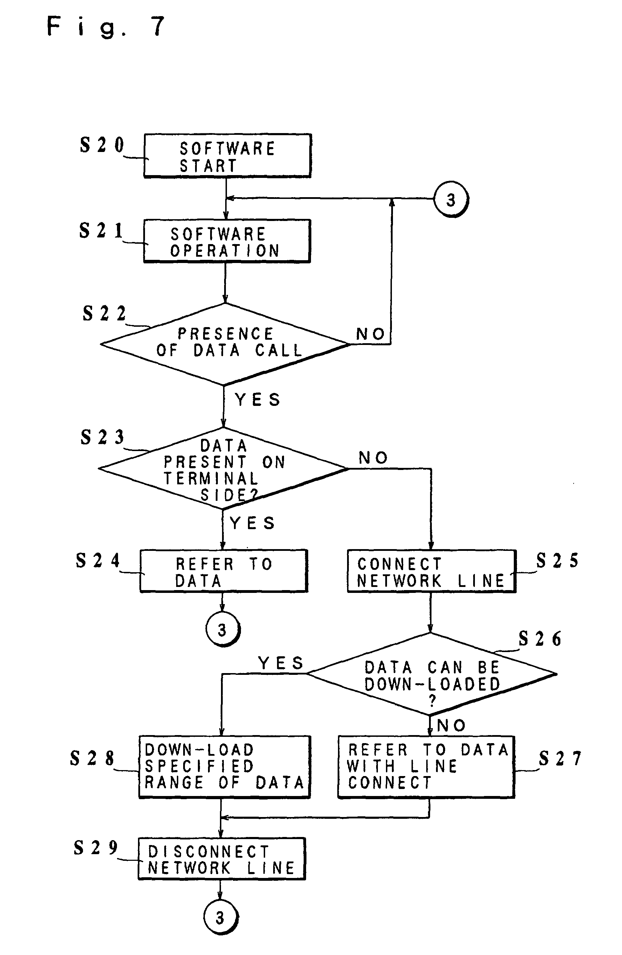

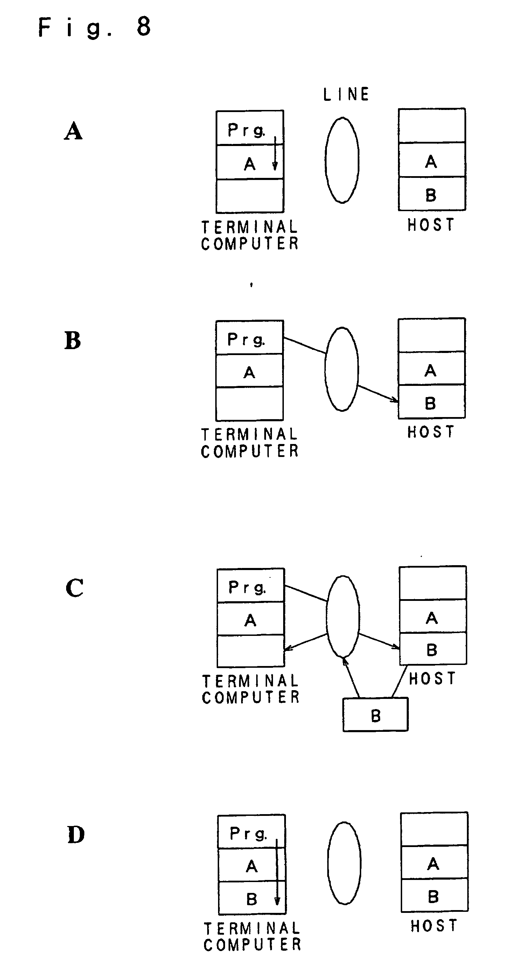

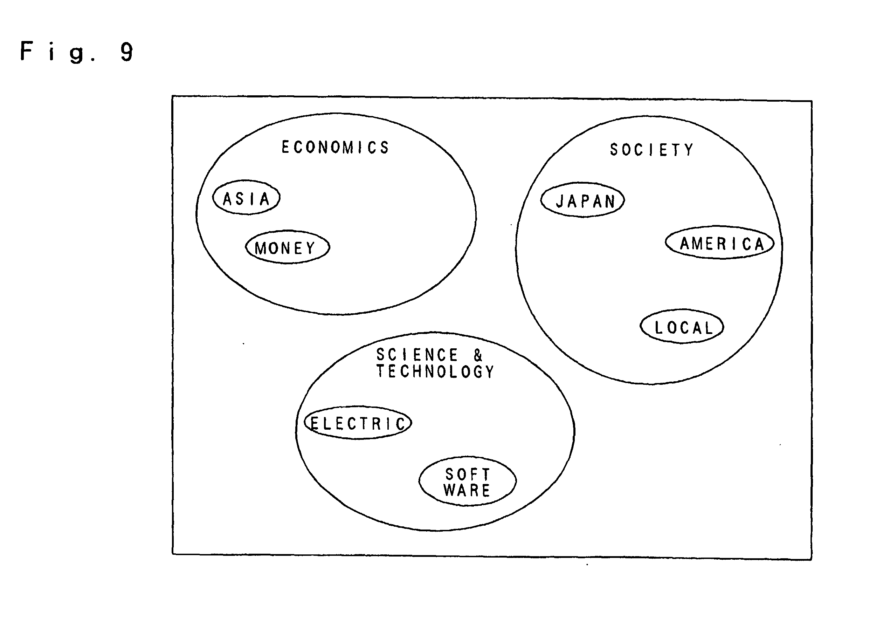

Next, a network system will be described in reference to FIGs. 7 through 9 in which the host computer 10 is connected through a public line (communication path) to the terminal computers 141, 142, 143, ..., 14n. FIG. 7 is a flow chart showing the operation of the network system. FIG. 8 schematically shows the data acquisition and the line connection. FIG. 9 shows an example of displayed image on the display device 37.

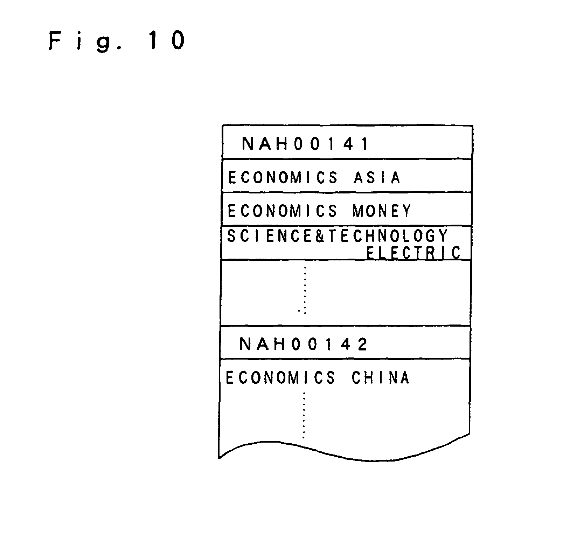

As shown in FIG. 9, networks that can be accessed on the basis of an ID by a user are displayed on the display screens of the terminal computers 141, 142, 143, ..., 14n. The display is carried out as follows. First, the terminal computers 141, 142, 143, ..., 14n identifies the personal ID by means of the software or ID card. Next, the personal ID is sent to the host computer 10. As shown in FIG. 10, softwares that can be used by the user are stored, corresponding to the personal ID, in the host computer 10. In the case shown in the drawing, the user of a personal ID "NAH00141" is permitted to use the fields of "Asia" and "Market" out of softwares of economics database. The host computer 10 sends back the softwares that can be used by the user to the terminal computers 141, 142, 143, ..., 14n. The terminal computers 141, 142, 143, ..., 14n receives them and displays them on the display screen of the display device 37 as shown in FIG. 9.

An operator user uses an input device 39 such as a mouse to start any one of the softwares displayed on the display device 37 (FIG. 7, step S20). For example, it is assumed that the user selects a software in the "money" field in "economics." The software is started (step S21) and instructions are executed in succession. In that case, a determination is made whether the instruction requires data (step S22). If not, the process returns to the step S21.

If the instruction requires data, the CPU 36 of the terminal computer determines whether the required data are present in the memory device 38 of its own terminal computer (step S23). If present, the data are obtained from the memory device 38 (step S24). In other words, as shown in FIG. 8A, the software Prg obtains data A without a line connection and displays them on the display device.

In the step S23, if no data are present in the memory device 38 of its own terminal computer, the data are assumed to be present in the host computer 10. Therefore, the terminal computer connects the line to the host computer 10 to create a network (step S25). The process of creating the network is the same as that of steps S5 through S13 shown in FIGs. 5 and 6.

Next, the terminal computer determines whether the data may be duplicated (step S26). This determination may be carried out by watching the graph of duplication possibility stored in the host computer 10 together with the data in question. Those prohibited from duplication for the reason of copyright is specified as "NO."

If the data may be duplicated, the terminal computer copies the data from the host computer 10 through the line to its own memory device 38 (this step is referred to as down-load) (step S28). When the down-load is over, the terminal computer disconnects the line connection (step S29). Namely, as shown in FIG. 8C, data B that are not stored on the terminal side are down-loaded from the host computer. If a request for the down-loaded data is made thereafter, the data may be obtained from the memory device 38 without the line connection (Refer to FIG. 8D).

If the step S26 determines that the down-load cannot be made, the terminal computer takes the data B from the host computer 10 in the state of the line being connected (without down-loading to the memory device 38). This state is shown in FIG. 8B. When the data acquisition is over, the line is disconnected (step S29).

As described above, since it is arranged that the line is connected only when necessary, there is no waste of public line rate even when it is used.

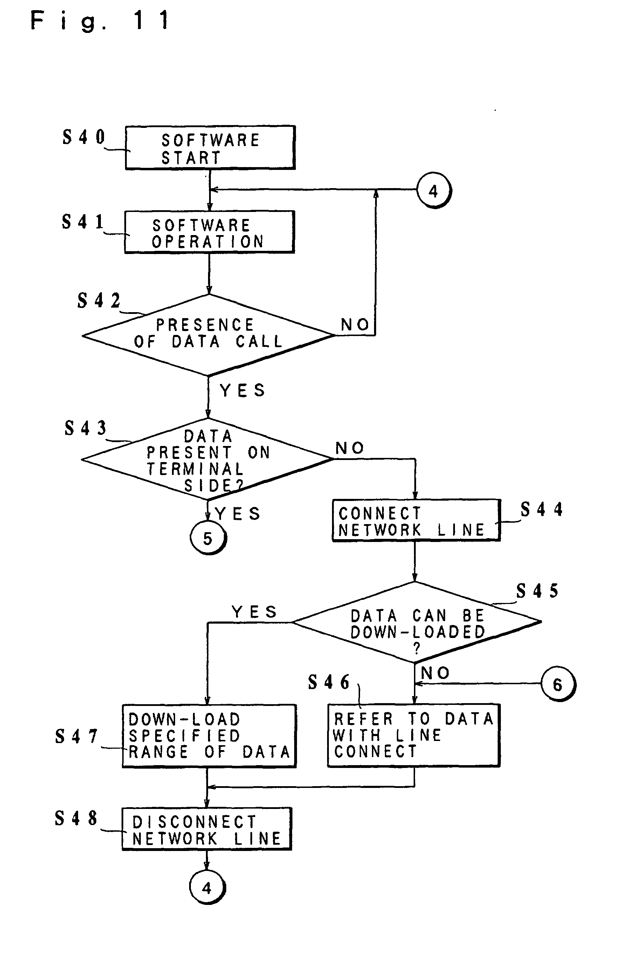

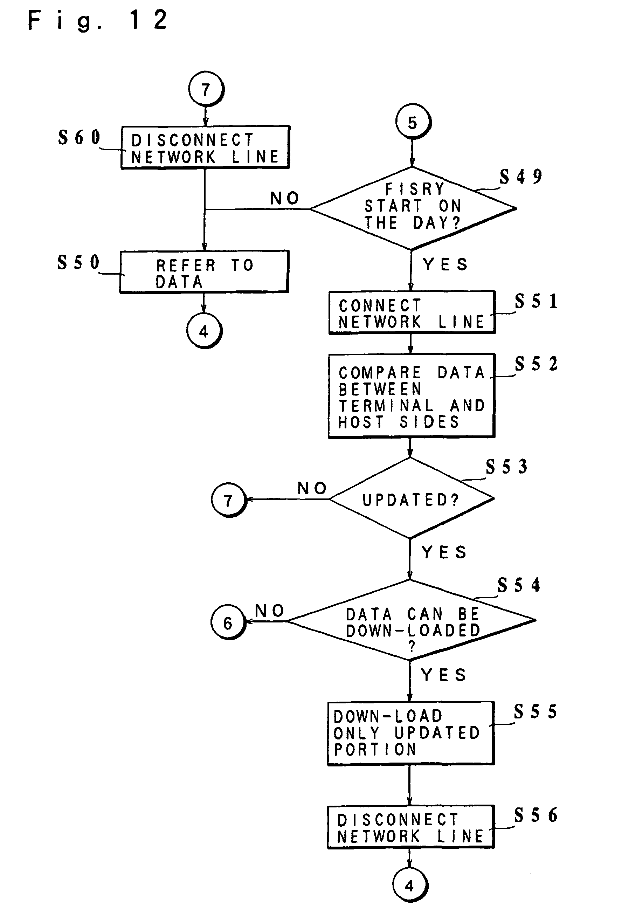

FIGs. 11 and 12 show flow charts of embodiments capable of coping with updates in data in the host computer 10. The process when the data are not present in the terminal computer is the same as that of steps S25 through 29 shown in FIG. 7.

When the data are present in the terminal computer, a determination is made whether the start of the software is the first one on that day (step S49). If a start has been made already, data are obtained from the memory device 38 (step S50). This state corresponds to FIG. 8A.

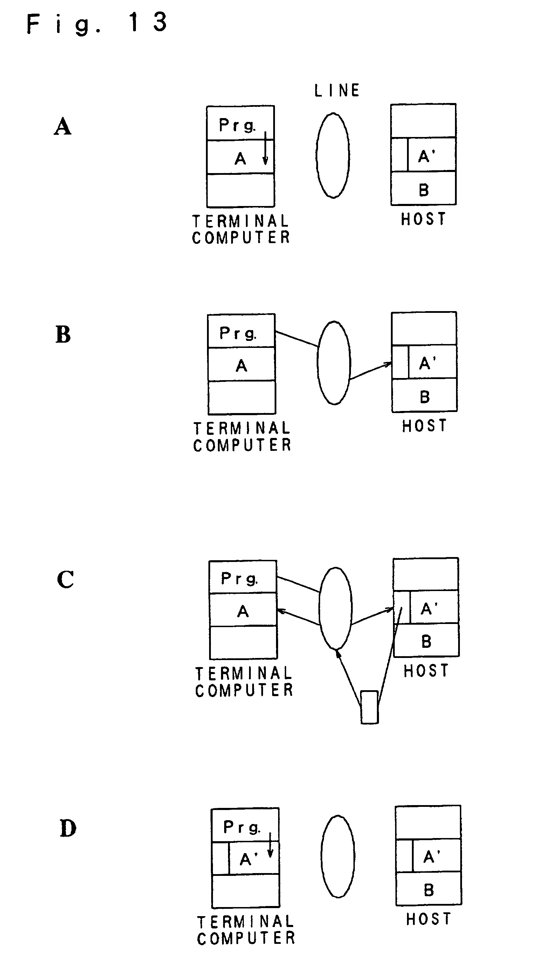

When the start is first one on that day, the terminal computer makes connection to the line (step S51). Then the data A (FIG.13A) of the terminal computer are compared with data A' (FIG.13B). of the host computer 10 (steps S52 and 53). If both data are the same each other, namely if no data update has been made in the host computer 10, the line is disconnected (step S60). After that, data in the terminal computer are taken (step S50). When the data in the host computer 10 is updated to A' as described above, a determination is made whether the updated portion of the data can be down-loaded (step S54).

If the down-load is impossible, the data are obtained from the host computer 10 (not copied) while the line is connected and then the line is disconnected (steps S46 and S48).

If the down load is possible, only the updated portion of the data are down-loaded into the memory device 38 of the terminal computer (step S55).(Refer to FIG 13C). After that , the line is disconnected (step S56). Request for data thereafter are processed according to the data down-laded into the memory device 38 (FIG. 13D).

With the embodiment described above, data acquisition is possible, also coping with data updates in the host computer.

In the embodiment described above, the determination on the data update is made only for the first start on that day. However, this may be arranged so that the determination is made at every first start in the corresponding week, month, or time of day, etc.

The network management method described in claim 1 and the network system described in claim 5 are arranged that a software started in each terminal computer is provided with a software code in advance and that a network is created with software having a same software code. Therefore, the network is flexibly changed and formed by simply changing softwares in respective terminal computers.

The network management method described in claim 2 and the network system described in claim 6 are arranged that a host computer discriminates authenticity of a user ID sent from each of the terminal computers and permits access to the host computer only when the user ID is authentic and creates a network. Therefore, the network is prevented from unauthorized use through the terminal computer. In other words, each user can be managed.

The network connection possibility display method described in claim 3 is arranged that accessible networks only are displayed on a display device on the basis of user ID codes. Therefore, the terminal computer user can easily know the possibility of connection to the network.

The network management method described in claim 4 and the network system described in claim 7 are arranged that the host computer creates a network by interconnecting the programs or data when creating the network with softwares having the same software code. Therefore, a program does not operate and data cannot be taken out from the terminal computer unless a network is created.

## Claims

1. A network system having a host computer (10) and a plurality of terminal computers (14n) connected to the host computer (10) through a communication path, wherein each of the terminal computers comprises:
reading means for reading software code contained in the software started in the terminal computer (14n); and
transmitting means for transmitting, through a communication path, the software codes transmitted from the terminal computers (14n),
the host computer (10) comprising:
receiving means for receiving the software codes transmitted from the terminal computers (14n); and
network forming means for creating a network by interconnecting the terminal computers (14n) that are operating software programs having the same software code among the software codes received by the receiving means,
wherein the terminal computers (14n) which belong to the network, share data or a program stored in the host computer (10).

2. A network system according to claim 1, wherein each terminal computer (14n) further comprises display means for causing only networks that are accessible as a selectable state on the display means, based on the user identification code, to be displayed; and
wherein the network forming means of the host computer (10) determines the authenticity of a user identification transmitted from each of the terminal computers (14n) and permits access to the host computer (10) only when the user identification is authentic.

3. A host computer for use in a network system having a host computer (10) and a plurality of terminal computers (14n) connected to the host computer (10), wherein each terminal computer (14n) comprises:
reading means for reading a software code contained in a software program started in the terminal computer (14n); and
transmitting means for transmitting through a communication path, the software code read by the reading means,
wherein the terminal computers (14n) which belong to the network, share data or program stored in the host computer (10),
the host computer (10) comprising:
receiving means for receiving the software codes transmitted from the terminal computers (14n); and
network forming means for creating a network by interconnecting the terminal computers (14n) that are operating software programs having the same software code among the software codes received by the receiving means.

4. A host computer according to claim 3, wherein each terminal computer (14n) further comprises display means for causing only networks that are accessible as a selectable state on the display means based on the user identification code to be displayed,
the network forming means of the host computer (10) determining the authenticity of a user identification transmitted from the terminal computers (14n) and permitting access to the host computer (10) only when the user identification is authentic.

5. A terminal computer for use in a network system having a host computer (10) and a plurality of terminal computers (14n) connected to the host computer (10), the terminal computer (14n) comprising:
reading means for reading a software code contained in a software program started in the terminal computer (14n); and
transmitting means for transmitting through a communication path, the software code read by the reading means,
the host computer (10) comprising:
receiving means for receiving the software codes transmitted from the terminal computer (14n); and
network forming means for creating a network by interconnecting the terminal computers (14n) that are operating software programs having the same software code among the software codes received by the receiving means,
wherein the terminal computers (14n) which belong to the network, share data or program stored in the host computer (10).

6. A terminal computer according to claim 5, further comprising:
display means for causing only networks that are accessible as a selectable state on the display means based on the user identification code to be displayed,
the network forming means of the host computer (10) determining the authenticity of a user identification transmitted from the terminal computer (14n) and permits access to the host computer (10) only when the user identification is authentic.

7. A network management method for use in a network system having a host computer (10) and a plurality of terminal computers (14n) connected to the host computer (10), wherein each of the terminal computers (14n) performs the steps of:
reading a software code contained in a software program started in the terminal computer (14n); and
transmitting through a communication path, the read software code, and
the host computer (10) performs the steps of:
receiving the software codes transmitted from the terminal computers (14n); and
creating a network by interconnecting the terminal computers (14n) that are operating software programs having the same software code among the received software codes,
wherein the terminal computers (14n) which belong to the network, share data or program stored in the host computer (10).

8. A method according to claim 7, wherein each terminal computer (14n) performs the further steps of:
causing only networks that are accessible as a selectable state on the display means based on the user identification code to be displayed; and
the host computer (10) determines the authenticity of a user identification transmitted from the terminal computers (14n) and permits access to the host computer (10) only when the user identification is authentic.

9. A method of use of a host computer in a network system having a host computer (10) and a plurality of terminal computers (14n) connected to the host computer (10), wherein:
each terminal computer (14n) reads a software code contained in a software program started in the terminal computer (14n); and
transmis through a communication path, the software code read by the reading means,
wherein the terminal computers (14n) which belong to the network, share data or program stored in the host computer (10),
the host computer (10) performing the steps of:
receiving the software codes transmitted from the terminal computers (14n); and
creating a network by interconnecting the terminal computers (14n) that are operating software programs having the same software code among the software codes received by the receiving means.

10. A method according to claim 9, wherein each terminal computer (14n) further performs the step of causing to be displayed only networks that are accessible as a selectable state based on the user identification code to be displayed,
the host computer (10) determining the authenticity of a user identification transmitted from the terminal computers (14n) and permitting access to the host computer (10) only when the user identification is authentic.

11. A method of use of a terminal computer in a network system having a host computer (10) and a plurality of terminal computers (14n) connected to the host computer (10), the terminal computer (14n) performing the steps of:
reading a software code contained in a software program started in the terminal computer (14n); and
transmitting through a communication path, the read software code means,
the host computer (10) receiving the software codes transmitted from said terminal computer (14n); and creating a network by interconnecting the terminal computers (14n) that are operating software programs having the same software code among the received software codes,
wherein the terminal computers (14n) which belong to the network, share data or program stored in the host computer (10).

12. A method according to claim 11, wherein the terminal computer (14n) further causes only networks that are accessible as a selectable state based on the user identification code to be displayed,
the host computer (10) determining the authenticity of a user identification transmitted from said terminal computer (14n) and permitting access to the host computer (10) only when the user identification is authentic.

13. A sequence of processor implementable instructions for causing a essor means to implement all the steps of a method rding to any one of claims 7 to 12.

14. A memory medium storing a sequence of processor implementable instructions for causing a processor means to implement all the steps of a method according to any one of claims 7 to 12.

## Patentansprüche

1. Netzwerksystem, das einen Hostrechner (10) und eine Vielzahl von mit dem Hostrechner durch einen Kommunikationspfad verbundenen Terminalrechnern (14n) besitzt, wobei jeder der Terminalrechner umfasst:
Lesemittel zum Lesen von Softwarecode, der in der im Terminalrechner (14n) gestarteten Software enthalten ist; und
Sendemittel zum Senden der von den Terminalrechnern (14n) gesendeten Softwarecodes über einen Kommunikationspfad,
wobei der Hostrechner (10) umfasst:
Empfangsmittel zum Empfangen der von den Terminalrechnern (14n) gesendeten Softwarecodes; und
Netzwerkgestaltungsmittel zum Erstellen eines Netzwerks durch Verbinden der Terminalrechner (14n), die Softwareprogramme anwenden, die den gleichen Softwarecode unter den durch die Empfangsmittel empfangenen Softwarecodes besitzen,
wobei die Terminalrechner (14n), die zum Netzwerk gehören, Daten oder ein Programm gemeinsam benutzen, gespeichert im Hostrechner (10).

2. Netzwerksystem gemäß Anspruch 1, wobei jeder Terminalrechner (14n) ferner Anzeigemittel umfasst, um zu bewirken, daß nur Netzwerke, die basierend auf dem Benutzeridentifikationscode als ein auswählbarer Status auf den Anzeigemitteln zugänglich sind, angezeigt werden; und wobei die Netzwerkgestaltungsmittel des Hostrechners (10) die Authentizität einer von jedem der Terminalrechner (14n) gesendeten Benutzeridentifikation ermitteln und einen Zugriff auf den Hostrechner (10) nur genehmigen, wenn die Benutzeridentifikation authentisch ist.

3. Hostrechner zur Benutzung in einem Netzwerksystem, das einen Hostrechner (10) und eine Vielzahl von mit dem Hostrechner (10) verbundenen Terminalrechnern (14n) besitzt, wobei
jeder Terminalrechner umfasst:
Lesemittel zum Lesen eines Softwarecodes, der in einem im Hostrechner (14n) gestarteten Softwareprogramm enthalten ist; und
Sendemittel zum Senden des von den Lesemitteln gelesenen Softwarecodes über einen Kommunikationspfad,
wobei die Terminalrechner (14n), die zum Netzwerk gehören, Daten oder ein Programm gemeinsam benutzen, gespeichert im Hostrechner (10),
der Hostrechner 10 umfasst:
Empfangsmittel zum Empfangen der von den Terminalrechnern (14n) gesendeten Softwarecodes; und
Netzwerkgestaltungsmittel zum Erstellen eines Netzwerks durch Verbinden der Terminalrechner (14n), die Softwareprogramme anwenden, die den gleichen Softwarecode unter den durch die Empfangsmittel empfangenen Softwarecodes besitzen.

4. Hostrechner gemäß Anspruch 3, wobei jeder Terminalrechner (14n) ferner umfasst Anzeigemittel, um zu bewirken, daß nur Netzwerke, die basierend auf dem Benutzeridentifikationscode als ein auswählbarer Status auf den Anzeigemitteln zugänglich sind, angezeigt werden,
wobei die Netzwerkgestaltungsmittel des Hostrechners (10) die Authentizität einer von den Terminalrechnern (14n) gesendeten Benutzeridentifikation ermitteln und einen Zugriff auf den Hostrechner (10) nur genehmigen, wenn die Benutzeridentifikation authentisch ist.

5. Terminalrechner für die Benutzung in einem Netzwerksystem, das einen Hostrechner (10) und eine Vielzahl von mit dem Hostrechner (10) verbundenen Terminalrechnern besitzt (14n), wobei
der Terminalrechner (14n) umfasst:
Lesemittel zum Lesen eines Softwarecodes, der in einem im Terminalrechner (14n) gestarteten Softwareprogramm enthalten ist; und
Sendemittel zum Senden des von den Lesemitteln gelesenen Softwarecodes über einen Kommunikationspfad,
der Hostrechner (10) umfasst:
Empfangsmittel zum Empfangen der von dem Terminalrechner (14n) gesendeten Softwarecodes; und
Netzwerkgestaltungsmittel zum Erstellen eines Netzwerks durch Verbinden der Terminalrechner (14n), die Softwareprogramme anwenden, die den gleichen Softwarecode unter den durch die Empfangsmittel empfangenen Softwarecodes besitzen,
wobei die Terminalrechner (14n), die zum Netzwerk gehören, Daten oder ein Programm gemeinsam benutzen, gespeichert im Hostrechner (10).

6. Terminalrechner gemäß Anspruch 5, ferner umfassend:
Anzeigemittel, um zu bewirken, daß nur Netzwerke, die basierend auf dem Benutzeridentifikationscode als ein auswählbarer Status auf den Anzeigemitteln zugänglich sind, angezeigt werden,
wobei die Netzwerkgestaltungsmittel des Hostrechners (10) die Authentizität einer vom Terminalrechner (14n) gesendeten Benutzeridentifikation ermitteln und den Zugriff auf den Hostrechner (10) nur genehmigen, wenn die Benutzeridentifikation authentisch ist.

7. Netzwerkmanagementverfahren zur Benutzung in einem Netzwerksystem, das einen Hostrechner (10) und eine Vielzahl von mit dem Hostrechner (10) verbundenen Terminalrechnern (14n) besitzt, wobei
jeder der Terminalrechner (14n) die Schritte ausführt des:
Lesens eines Softwarecodes, der in einem im Terminalrechner (14n) gestarteten Softwareprogramm enthalten ist; und
Sendens des gelesenen Softwarecodes über einen Kommunikationspfad, und
der Hostrechner (10) die Schritte ausführt des:
Empfangens der von den Terminalrechnern (14n) gesendeten Softwarecodes; und
Erstellens eines Netzwerks durch Verbinden der Terminalrechner (14n), die Softwareprogramme anwenden, die den gleichen Softwarecode unter den empfangenen Softwarecodes besitzen,
wobei die Terminalrechner (14n), die zum Netzwerk gehören, Daten oder ein Programm gemeinsam benutzen, gespeichert im Hostrechner (10).

8. Verfahren gemäß Anspruch 7, wobei
jeder Terminalrechner (14n) die weiteren Schritte ausführt des:
Bewirkens, daß nur Netzwerke, die basierend auf dem Benutzeridentifikationscode als ein auswählbarer Status auf den Anzeigemitteln zugänglich sind, angezeigt werden; und
der Hostrechner (10) die Authentizität einer von den Terminalrechnern (14n) gesendeten Benutzeridentifikation ermittelt und den Zugriff auf den Hostrechner (10) nur genehmigt, wenn die Benutzeridentifikation authentisch ist.

9. Verfahren der Benutzung eines Hostrechners in einem Netzwerksystem, das einen Hostrechner (10) und eine Vielzahl von mit dem Hostrechner (10) verbundenen Terminalrechnern (14n) besitzt, wobei
jeder Terminalrechner (14n) einen Softwarecode liest, der in einem im Terminalrechner (14n) gestarteten Softwareprogramm enthalten ist; und
über einen Kommunikationspfad den von den Lesemitteln gelesenen Softwarecode sendet,
wobei die Terminalrechner (14n), die zum Netzwerk gehören, Daten oder ein Programm gemeinsam benutzen, gespeichert im Hostrechner (10),
der Hostrechner (10) die Schritte ausführt des:
Empfangens der von den Terminalrechnern (14n) gesendeten Softwarecodes; und
Erstellens eines Netzwerks durch Verbinden der Terminalrechner (14n), die Softwareprogramme anwenden, die den gleichen Softwarecode unter den durch die Empfangsmittel empfangenen Softwarecodes besitzen.

10. Verfahren gemäß Anspruch 9, wobei
jeder Terminalrechner (14n) ferner den Schritt ausführt des Bewirkens, daß nur Netzwerke angezeigt werden, die basierend auf dem Benutzeridentifikationscode als ein auswählbarer Status zugänglich sind,
wobei der Hostrechner (10) die Authentizität einer Benutzeridentifikation ermittelt, die vom Terminalrechner (14n) gesendet wird, und einen Zugriff auf den Hostrechner (10) nur genehmigt, wenn die Benutzeridentifikation authentisch ist.

11. Verfahren der Benutzung eines Terminalrechners in einem Netzwerksystem, das einen Hostrechner (10) und eine Vielzahl von mit dem Hostrechner (10) verbundenen Terminalrechnern (14n) besitzt, wobei
der Terminalrechner (14n) die Schritte ausführt des:
Lesens eines Softwarecodes, der in einem im Terminalrechner (14n) gestarteten Softwareprogramm beinhaltet ist; und
Sendens der gelesenen Softwarecodemittel über einen Kommunikationspfad,
der Hostrechner (10) die von dem Terminalrechner (14n) gesendeten Softwarecodes empfängt; und
Erstellens eines Netzwerks durch Verbinden der Terminalrechner (14n), die Softwareprogramme anwenden, die den gleichen Softwarecode unter den empfangenen Softwarecodes besitzen,
wobei die Terminalrechner (14n), die zum Netzwerk gehören, Daten oder ein Programm gemeinsam benutzen, gespeichert im Hostrechner (10).

12. Verfahren gemäß Anspruch 11, wobei
der Terminalrechner (14n) ferner bewirkt, daß nur Netzwerke angezeigt werden, die basierend auf dem Benutzeridentifikationscode als ein auswählbarer Status zugänglich sind,
der Hostrechner (10) die Authentizität einer vom Terminalrechner (14n) gesendeten Benutzeridentifikation ermittelt und den Zugriff auf den Hostrechner (10) nur genehmigt, wenn die Benutzeridentifikation authentisch ist.

13. Folge von für einen Prozessor ausführbaren Anweisungen, um ein Prozessormittel dazu zu veranlassen, alle Schritte eines Verfahrens gemäß einem der Ansprüche 7 bis 12 auszuführen.

14. Speichermedium, das eine Folge von für einen Prozessor ausführbaren Anweisungen, um ein Prozessormittel dazu zu veranlassen, alle Schritte eines Verfahrens gemäß einem der Ansprüche 7 bis 12 auszuführen, speichert.

## Revendications

1. Système de réseau ayant un ordinateur hôte (10) et une pluralité d'ordinateurs satellites (14) connectés à l'ordinateur hôte (10) via un trajet de communication, dans lequel chacun des ordinateurs satellites comportent :
des moyens de lecture pour lire du code logiciel contenu dans le logiciel lancé dans l'ordinateur satellite (14n), et
des moyens de transmission pour transmettre, via un trajet de communication, les codes logiciels transmis par les ordinateurs satellites (14n),
l'ordinateur hôte (10) comportant :
des moyens de réception pour recevoir les codes logiciels transmis par les ordinateurs satellites (14n), et
des moyens de formation de réseau pour créer un réseau en interconnectant les ordinateurs satellites (14n) qui exécutent des programmes logiciels ayant le même code logiciel parmi les codes logiciels reçus par les moyens de réception,
les ordinateurs satellites (14n) qui appartiennent au réseau, partageant des données, ou un programme, mémorisées dans l'ordinateur hôte (10).

2. Système de réseau selon la revendication 1, dans lequel chaque ordinateur satellite (14n) comporte en outre des moyens d'affichage pour provoquer l'affichage uniquement des réseaux qui sont accessibles en tant qu'état sélectionnable sur les moyens d'affichage, sur la base du code d'identification d'utilisateur, et
dans lequel les moyens de formation de réseau de l'ordinateur hôte (10) déterminent l'authenticité d'une identification d'utilisateur transmise par chacun des ordinateurs satellites (14n) et autorisent l'accès à l'ordinateur hôte (10) uniquement lorsque l'identification d'utilisateur est authentique.

3. Ordinateur hôte à utiliser dans un système de réseau ayant un ordinateur hôte (10) et une pluralité d'ordinateurs satellites (14n) connectés à l'ordinateur hôte (10), dans lequel chaque ordinateur satellite (14n) comporte :
des moyens de lecture pour lire un code logiciel contenu dans un programme logiciel lancé dans l'ordinateur satellite (14n), et
des moyens de transmission pour transmettre via un trajet de communication, le code logiciel lu par les moyens de lecture,
les ordinateurs satellites (14n) qui appartiennent au réseau, partageant des données, ou un programme, mémorisées dans l'ordinateur hôte (10),
l'ordinateur hôte (10) comportant :
des moyens de réception pour recevoir les codes logiciels transmis par les ordinateurs satellites (14n), et
des moyens de formation de réseau pour créer un réseau en interconnectant les ordinateurs satellites (14n) qui exécutent des programmes logiciels ayant le même code logiciel parmi les codes logiciels reçus par les moyens de réception.

4. Ordinateur hôte selon la revendication 3, dans lequel chaque ordinateur satellite (14n) comporte en outre des moyens d'affichage pour provoquer l'affichage uniquement des réseaux qui sont accessibles en tant qu'état sélectionnable sur les moyens d'affichage sur la base du code d'identification utilisateur,
des moyens de formation de réseau de l'ordinateur hôte (10) déterminant l'authenticité d'une identification d'utilisateur transmise par les ordinateurs satellites (14n) et autorisant l'accès à l'ordinateur hôte (10) uniquement lorsque l'identification d'utilisateur est authentique.

5. Ordinateur satellite à utiliser dans un système de réseau ayant un ordinateur hôte (10) et une pluralité d'ordinateurs satellites (14n) connectés à l'ordinateur hôte (10), l'ordinateur satellite (14n) comportant :
des moyens de lecture pour lire un code logiciel contenu dans un programme logiciel lancé dans l'ordinateur satellite (14n), et
des moyens de transmission pour transmettre via un trajet de communication, le code logiciel lu par les moyens de lecture,
l'ordinateur hôte (10) comportant :
des moyens de réception pour recevoir les codes logiciels transmis par l'ordinateur satellite (14n), et
des moyens de formation de réseau pour créer un réseau en interconnectant les ordinateurs satellites (14n) qui exécutent des programmes logiciels ayant le même code logiciel parmi les codes logiciels reçus par les moyens de réception,
les ordinateurs satellites (14n) qui appartiennent au réseau, partageant les données, ou un programme, mémorisées dans l'ordinateur hôte (10).

6. Ordinateur satellite selon la revendication 5, comportant en outre :
des moyens d'affichage pour provoquer l'affichage uniquement des réseaux qui sont accessibles en tant qu'état sélectionnable sur les moyens d'affichage sur la base du code d'identification utilisateur, et
les moyens de formation de réseau de l'ordinateur hôte (10) déterminant l'authenticité d'une identification d'utilisateur transmise par l'ordinateur satellite (14n) et autorisant l'accès à l'ordinateur hôte (10) uniquement lorsque l'identification d'utilisateur est authentique.

7. Procédé de gestion de réseau à utiliser dans un système de réseau ayant un ordinateur hôte (10) et une pluralité d'ordinateurs satellites (14n) connectés à l'ordinateur h ôte ( 10), d ans lequel chacun d es o rdinateurs satellites (14n) exécute les étapes consistant à :
lire un code logiciel contenu dans un programme logiciel lancé dans l'ordinateur satellite (14n), et
transmettre via un trajet de communication, le code logiciel lu, et
l'ordinateur hôte (10) exécute les étapes consistant à :
recevoir les codes logiciels transmis par les ordinateurs satellites (14n), et
créer un réseau en interconnectant les ordinateurs satellites (14n) qui exécutent des programmes logiciels ayant le même code logiciel parmi les codes logiciels reçus,
les ordinateurs satellites (14n) qui appartiennent au réseau, partageant des données, ou un programme, mémorisées dans l'ordinateur hôte (10).

8. Procédé selon la revendication 7, dans lequel chaque ordinateur satellite (14n) exécute l'étape supplémentaire consistant à :
provoquer l'affichage uniquement des réseaux qui sont accessibles en tant qu'un état sélectionnable sur les moyens d'affichage sur la base du code d'identification d'utilisateur, et
l'ordinateur hôte (10) détermine l'authenticité d'une identification d'utilisateur transmise par les ordinateurs satellites (14n) et autorise l'accès à l'ordinateur hôte (10) uniquement lorsque l'identification d'utilisateur est authentique.

9. Procédé pour utiliser un ordinateur hôte dans un système de réseau ayant un ordinateur hôte (10) et une pluralité d'ordinateurs satellites (14n) connectés à l'ordinateur hôte (10), dans lequel :
chaque ordinateur satellite (14n) lit un code logiciel contenu dans un programme logiciel lancé dans l'ordinateur satellite (14n), et
transmet via un trajet de communication, le code logiciel lu par les moyens de lecture,
les ordinateurs satellites (14n) qui appartiennent au réseau, partageant des données, ou un programme, mémorisées dans l'ordinateur hôte (10),
l'ordinateur hôte (10) exécutant les étapes consistant à :
recevoir les codes logiciels transmis par les ordinateurs satellites (14n), et
créer un réseau en interconnectant les ordinateurs satellites (14n) qui exécutent des programmes logiciels ayant le même code logiciel parmi les codes logiciels reçus par les moyens de réception.

10. Procédé selon la revendication 9, dans lequel chaque ordinateur satellite (14n) exécute en outre l'étape consistant à provoquer l'affichage uniquement des réseaux qui sont accessibles en tant qu'état sélectionnable sur la base du code d'identification d'utilisateur,
l'ordinateur hôte (10) déterminant l'authenticité d'une identification d'utilisateur transmise par les ordinateurs satellites (14n) et autorisant l'accès à l'ordinateur hôte (10) uniquement lorsque l'identification d'utilisateur est authentique.

11. Procédé pour utiliser un ordinateur satellite dans un système de réseau ayant un ordinateur hôte (10) et une pluralité d'ordinateurs satellites (14n) connectés à l'ordinateur hôte (10), l'ordinateur satellite (14n) exécutant les étapes consistant à :
lire un code logiciel contenu dans un programme logiciel lancé dans l'ordinateur satellite (14n), et
transmettre via un trajet de communication, les moyens de code logiciel lu,
l'ordinateur hôte (10) recevant les codes logiciels transmis par ledit ordinateur satellite (14n), et créant un réseau en interconnectant les ordinateurs satellites (14n) qui exécutent les programmes logiciels ayant le même code logiciel parmi les codes logiciels reçus,
les ordinateurs satellites (14n) qui appartiennent au réseau, partageant des données, ou un programme, mémorisées dans l'ordinateur hôte (10).

12. Procédé selon la revendication 11, dans lequel l'ordinateur satellite (14n) provoque en outre l'affichage uniquement des réseaux qui sont accessibles en tant qu'état sélectionnable sur la base du code d'identification d'utilisateur,
l'ordinateur hôte (10) déterminant l'authenticité d'une identification d'utilisateur transmise par ledit ordinateur satellite (14n) et autorisant l'accès à l'ordinateur hôte (10) uniquement lorsque l'identification d'utilisateur est authentique.

13. Séquence d'instructions pouvant être exécutées par un processeur pour amener des moyens de processeur à exécuter toutes les étapes d'un procédé conformément à l'une quelconque des revendications 7 à 12.

14. Support de mémoire mémorisant une séquence d'instructions pouvant être exécutées par un processeur pour amener des moyens de processeur à exécuter toutes les étapes d'un procédé conformément à l'une quelconque des revendications 7 à 12.
